# EUROPEAN PATENT APPLICATION

(11) **EP 4 624 284 A1**
(43) Date of publication of application: **01.10.2025**
(21) Application number: 25166819.0
(22) Date of filing: 27.03.2025
(51) Int. Cl.: B60T 1/00, B60T 13/74, F16D 55/226, F16D 63/00, F16D 65/18

(54) **ELECTRO-MECHANICAL BRAKE APPARATUS WITH RADIALLY INTEGRATED RATCHET PARKING AND VEHICLE**

(30) Priority: 29.03.2024 CN 202410392551
(71) Applicant: Huawei Digital Power Technologies Co., Ltd., Shenzhen, Guangdong 518043 (CN)
(72) Inventor: HE, Yuhui, Shenzhen, 518043 (CN); LI, Xianan, Shenzhen, 518043 (CN); LUO, Yuehao, Shenzhen, 518043 (CN)
(74) Representative: Gill Jennings & Every LLP

(57) **Abstract**

This application provides an electro-mechanical brake apparatus with a radially integrated ratchet parking and a vehicle. A motor shaft of a brake motor in the electro-mechanical brake apparatus provided in this application is configured to rotate in one direction and drive a friction plate to abut against a brake disc. Two ratchets are arranged opposite to each other in an axial direction of the brake motor. One ratchet is configured to be in transmission connection to the motor shaft, and the other ratchet is configured to engage with the one ratchet. An axial driving piece is configured to drive the other ratchet to engage with the one ratchet in the axial direction of the brake motor. A circumferential limiting member is configured to limit a rotation angle of the other ratchet in the two engaged ratchets in another direction. A radial driving piece is configured to slide in a radial direction of the brake motor and drive the other ratchet to move away from the one ratchet in the axial direction of the brake motor, to disengage the one ratchet. An axial size of the electro-mechanical brake apparatus is compressed by integrating the ratchet parking mechanism into the electro-mechanical brake apparatus provided in this application in the radial direction.

## Description

### TECHNICAL FIELD

This application relates to the field of vehicle technologies, and in particular, to an electro-mechanical brake apparatus with a radially integrated ratchet parking and a vehicle.

### BACKGROUND

An electro-mechanical brake (electro-mechanical brake, EMB) apparatus drives a brake to brake through cooperation between a motor and a mechanical feed mechanism. The electro-mechanical brake apparatus is characterized by a simple structure, a sensitive response, stable load transfer, no hydraulic pipe, and the like, and has high transfer efficiency. In addition, the electro-mechanical brake apparatus further has a development trend of miniaturization, to adapt to wheel space of a vehicle.

### SUMMARY

This application provides an electro-mechanical brake apparatus with a radially integrated ratchet parking and a vehicle. A ratchet parking mechanism is integrated into an electro-mechanical brake apparatus in a radial direction, to compress an axial size of the electro-mechanical brake apparatus.

According to a first aspect, this application provides an electro-mechanical brake apparatus with a radially integrated ratchet parking. The electro-mechanical brake apparatus includes a brake motor, two ratchets, an axial driving piece, a circumferential limiting member, and a radial driving piece. A motor shaft of the brake motor is configured to rotate in one direction and drive a friction plate to abut against a brake disc. The two ratchets are arranged opposite to each other in an axial direction of the brake motor. One ratchet is configured to be in transmission connection to the motor shaft, and the other ratchet is configured to engage with the one ratchet. The axial driving piece is configured to drive the other ratchet to engage with the one ratchet in the axial direction of the brake motor. The circumferential limiting member is configured to limit a rotation angle of the other ratchet in the two engaged ratchets in another direction, and the one direction is opposite to the another direction. The radial driving piece is configured to slide in a radial direction of the brake motor and drive the other ratchet to move away from the one ratchet in the axial direction of the brake motor to disengage the one ratchet.

The electro-mechanical brake apparatus with the radially integrated ratchet parking in this application drives, via the brake motor, the friction plate to abut against a brake disc of a wheel, to implement braking. The one ratchet of the two ratchets is in transmission connection to the motor shaft, and a rotation angle of the other ratchet is limited by the circumferential limiting member. After the two ratchets are engaged with each other, a rotation angle of the one motor shaft in the another direction may be limited. Therefore, after the motor shaft rotates in the one direction and drives the friction plate to abut against the brake disc, the electro-mechanical brake apparatus in this application can limit reverse rotation of the motor shaft through engagement of the two ratchets, to implement a parking function.

In this application, the electro-mechanical apparatus drives, via the axial driving piece, the two ratchets to engage with each other. A structure of the axial driving piece is simple. This helps control an axial size of the electro-mechanical brake apparatus. The two ratchets are further disengaged via the radial driving piece, and rotation of the other ratchet is limited via the circumferential limiting member. The radial driving piece and the circumferential limiting member are both located on sides of the two ratchets in the radial direction of the brake motor, to compress the axial size of the electro-mechanical brake apparatus. Therefore, the overall axial size of the electro-mechanical brake apparatus in this application is controlled, to help the electro-mechanical brake apparatus adapt to wheel space.

In an implementation, in the axial direction of the brake motor, the two ratchets are sequentially sleeved on the motor shaft, and each ratchet includes two opposite end faces. One end face of one ratchet is arranged opposite to one end face of the other ratchet, the one end face of the one ratchet includes one circle of unidirectional meshing teeth, and the one end face of the other ratchet includes another circle of unidirectional meshing teeth. The one circle of unidirectional meshing teeth is configured to engage with the another circle of unidirectional meshing teeth to limit a rotation angle of the one ratchet in the another direction. The other end face of the one ratchet and the other end face of the other ratchet are arranged opposite to each other, and the other end face of the other ratchet is configured to be driven by the axial driving piece.

In this implementation, the two ratchets are engaged via the unidirectional meshing teeth, to limit a rotation angle of the one ratchet relative to the other ratchet in the another direction. When a gap occurs in cooperation between the electro-mechanical brake apparatus and the brake disc, the motor shaft may rotate in the one direction to compensate for the gap between the friction plate and the brake disc without being limited by the two engaged ratchets. This improves reliability of parking of the electro-mechanical brake apparatus.

In an implementation, an outer circumferential surface of the other ratchet includes at least one of at least one radial groove or at least one radial protrusion.

In an implementation, the outer circumferential surface of the other ratchet includes at least one radial groove. In the radial direction of the brake motor, a distance between a groove opening of each radial groove and the motor shaft is greater than a radius of the one ratchet, and a distance between a groove bottom of each radial groove and the motor shaft is less than or equal to a radius of the one ratchet.

In this implementation, a diameter of the other ratchet is greater than a diameter of the one ratchet, one or more radial grooves that at least partially extend out of the one ratchet are formed on the outer circumferential surface of the other ratchet, and each radial groove may be configured to accommodate one circumferential limiting member, to limit rotation of the other ratchet in the another direction via the circumferential limiting member.

In an implementation, the outer circumferential surface of the other ratchet includes at least one radial protrusion, and in the radial direction of the brake motor, a distance between the motor shaft and an end portion that is of each radial protrusion and that is away from the motor shaft is greater than a radius of the one ratchet.

In this implementation, one or more radial protrusions that at least partially extend out of the one ratchet are formed on the outer circumferential surface of the other ratchet, and each radial protrusion may be configured to abut against the circumferential limiting member, to limit rotation of the other ratchet in the another direction via the circumferential limiting member.

In an implementation, the outer circumferential surface of the other ratchet includes at least one radial protrusion, and the at least one radial protrusion includes at least one first radial protrusion. An extension direction of each first radial protrusion intersects a sliding direction of the radial driving piece.

In the radial direction of the brake motor, the distance between the motor shaft and the end portion that is of each first radial protrusion and that is away from the motor shaft is greater than a spacing distance between the radial driving piece and the motor shaft. In the axial direction of the brake motor, an end face that is of each first radial protrusion and that faces the one ratchet is configured to be driven by the radial driving piece.

In this implementation, in the one or more radial protrusions formed on the outer circumferential surface of the other ratchet, at least one radial protrusion extends into a sliding track of the radial driving piece, and is configured to accept driving of the radial driving piece and drive the other ratchet to slide in the axial direction of the brake motor in a direction away from the one ratchet, to disengage the two ratchets. The first radial protrusion may separately implement circumferential limiting and axial sliding functions of the other ratchet, to simplify a structure of the other ratchet.

In an implementation, the circumferential limiting member includes at least one limiting protrusion. In the radial direction of the brake motor, a spacing between each limiting protrusion and the motor shaft is greater than the radius of the one ratchet and less than a radius of the other ratchet, and each limiting protrusion is configured to be embedded into a radial groove on the outer circumferential surface of the other ratchet.

In an implementation, in the radial direction of the brake motor, a spacing between each limiting protrusion and the motor shaft is greater than the radius of the one ratchet and greater than a radius of the outer circumferential surface of the other ratchet, and each limiting protrusion is configured to abut against the radial protrusion on the outer circumferential surface of the other ratchet.

In the foregoing two implementations, the circumferential limiting member may include one or more limiting protrusions, and a distance between the limiting protrusion and the motor shaft is greater than the radius of the one ratchet to avoid the one ratchet. When the outer circumferential surface of the other ratchet includes a radial groove, a distance between the limiting protrusion and the motor shaft is less than the radius of the other ratchet, so that the limiting protrusion is embedded into each radial groove. When the outer circumferential surface of the other ratchet includes a radial protrusion, a distance between the limiting protrusion and the motor shaft is greater than the radius of the outer circumferential surface of the other ratchet, to avoid the outer circumferential surface of the other ratchet and abut against each radial protrusion.

In an implementation, a housing of the brake motor includes a motor end cover. In the axial direction of the brake motor, the motor end cover is arranged on a side of a stator of the brake motor, the motor shaft passes through a shaft hole of the motor end cover, and the two ratchets are arranged on a side that is of the motor end cover and that is away from the stator.

In the radial direction of the brake motor, a size of each ratchet is less than a size of the motor end cover.

In this implementation, the two ratchets are located on an outer side of the housing of the brake motor in the axial direction of the brake motor, and correspondingly, the axial driving piece, the circumferential limiting member, and the radial driving piece are also located on the outer side of the housing of the brake motor, and do not occupy internal space of the housing of the brake motor. An internal structure of the brake motor is compact. Each of outer diameters of the two ratchets is controlled to be less than an outer diameter of the motor end cover, so that radial sizes of the two ratchets can be further controlled. This facilitates miniaturization of the electro-mechanical brake apparatus.

In an implementation, an end face that is of the motor end cover and that is away from the stator includes at least one axial protrusion, and the at least one axial protrusion is configured to form the circumferential limiting member.

In this implementation, the circumferential limiting member includes the at least one axial protrusion, and each axial protrusion extends in the axial direction of the brake motor. The motor end cover is configured to fasten each axial protrusion, to limit rotation of the other ratchet relative to the brake motor.

In an implementation, the axial driving piece includes a pressing plate and an elastic member. The end face that is of the motor end cover and that is away from the stator is further configured to be fastened to the pressing plate. In the axial direction of the brake motor, the one ratchet is arranged between the other ratchet and the motor end cover, and the elastic member is connected between the other ratchet and the pressing plate.

In this implementation, in the axial direction of the brake motor, the motor end cover, the one ratchet, the other ratchet, the elastic member, and the pressing plate are sequentially arranged, and two ends of the elastic member are configured to abut against the other ratchet and the pressing plate, to drive the other ratchet to slide toward the one ratchet and implement engagement.

In an implementation, the axial driving piece includes an elastic member. In the axial direction of the brake motor, the other ratchet is arranged between the one ratchet and the motor end cover, and the elastic member is connected between the other ratchet and the end face that is of the motor end cover and that is away from the stator.

In this implementation, in the axial direction of the brake motor, the motor end cover, the elastic member, the other ratchet, and the one ratchet are sequentially arranged, and the two ends of the elastic member are configured to abut against the other ratchet and the motor end cover, to drive the other ratchet to slide toward the one ratchet and implement engagement.

The axial driving piece in the foregoing two implementations has a simple structure, and occupies small space in the axial direction of the brake motor. This helps further compress the axial size of the electro-mechanical brake apparatus.

In an implementation, the housing of the brake motor further includes a stator sleeve. The stator sleeve is configured to fasten and accommodate the stator of the brake motor, an outer circumferential surface of the motor end cover or an outer circumferential surface of the stator sleeve includes a radial boss, an extension direction of the radial boss is away from the motor shaft in the radial direction of the brake motor, the radial boss is configured to fasten a parking motor, and the parking motor is configured to drive the radial driving piece.

In this implementation, the parking motor is disposed in the radial direction of the brake motor, to drive the radial driving piece to slide toward or away from the two ratchets, so that the axial size of the electro-mechanical brake apparatus can be reduced.

In an implementation, an axial direction of the parking motor is parallel to the radial direction of the brake motor.

In an implementation, the axial direction of the parking motor is parallel to the axial direction of the brake motor, and the parking motor and the brake motor are located on a same side of the two ratchets in the axial direction of the brake.

In an implementation, the radial boss includes an accommodating groove, the parking motor includes a motor housing and an output shaft, and the output shaft extends out of the motor housing in the radial direction of the brake motor and is configured to drive the radial driving piece. In the axial direction of the brake motor, a groove opening of the accommodating groove faces the parking motor, and a sum of a distance between the output shaft and the motor end cover and a groove depth of the accommodating groove is greater than or equal to a radius of the motor housing.

In the radial direction of the brake motor, a length of the accommodating groove is greater than or equal to a length of the motor housing.

In this implementation, the axial direction of the parking motor is parallel to the radial direction of the brake motor, and the accommodating groove of the radial boss is configured to partially accommodate the parking motor, to reduce space occupied by the parking motor in the axial direction of the brake motor. In addition, the two ratchets are closer to the stator of the brake motor, and an internal structure of the electro-mechanical brake apparatus is arranged more compactly.

In an implementation, the radial driving piece includes a nut and at least one radial push rod. In the radial direction of the brake motor, one end of each radial push rod is configured to be fastened to the nut, the other end is configured to extend toward the two ratchets, and the nut is configured to receive driving force to push the at least one radial push rod to slide synchronously.

In the axial direction of the brake motor, a height difference between the one end and the other end of each radial push rod is greater than an engagement depth of the two ratchets.

In this implementation, the nut is configured to push each radial push rod to slide synchronously, and each radial push rod is configured to abut against the brake motor in the axial direction and push the other ratchet to slide. The height difference between the end and the other end of each radial push rod is greater than the engagement depth of the two ratchets, to ensure that the two ratchets are not in an engaged state.

In an implementation, in the axial direction of the brake motor, the one ratchet is arranged between the motor end cover and the other ratchet of the brake motor, and a thickness of the one end of each radial push rod is less than a distance between the other ratchet and the motor end cover.

In this implementation, the thickness of the one end of each radial push rod in the axial direction of the brake motor is less than the distance between the other ratchet and the motor end cover. In this way, each radial push rod is inserted between the other ratchet and the motor end cover in the radial direction of the brake motor, and pushes the other ratchet in the axial direction of the brake motor in a direction away from the stator.

In an implementation, in the axial direction of the brake motor, the other ratchet is arranged between the motor end cover and the one ratchet of the brake motor, and the height difference between the one end and the other end of each radial push rod is less than the distance between the other ratchet and the motor end cover.

In this implementation, the height difference between the one end and the other end of each radial push rod in the axial direction of the brake motor is less than the distance between the other ratchet and the motor end cover. In this way, each radial push rod pushes the other ratchet in the direction of the brake motor axial direction toward the stator, and the other ratchet is prevented from abutting against the motor end cover, to ensure that the two ratchets are reliably separated.

In an implementation, the at least one radial push rod is spaced from each other in a direction perpendicular to the sliding direction of the radial driving piece, and a distance between each radial push rod and the motor shaft is greater than the radius of the one ratchet and less than a maximum radius between the other ratchet and the motor shaft.

In this implementation, a distance between each radial push rod and the motor shaft is greater than the radius of the one ratchet to avoid the one ratchet. A distance between each radial push rod and the one motor shaft is less than a maximum radius between the other ratchet and the motor shaft, to ensure that each radial push rod is at least partially in contact with the other ratchet and pushes the other ratchet.

According to a second aspect, this application provides a vehicle. The vehicle includes a wheel, a vehicle frame, and the electro-mechanical brake apparatus provided in any one of the foregoing implementations.

An axial direction of a brake motor in the electro-mechanical brake apparatus is parallel to an axis of the wheel, and is used for slidable connection to the vehicle frame in the axial direction.

A motor shaft in the electro-mechanical brake apparatus is configured to rotate in one direction and drive a friction plate to slide in an axial direction of the wheel to abut against a brake disc.

Two ratchets in the electro-mechanical brake apparatus are configured to be engaged with each other to lock the friction plate.

Because an axial size of the electro-mechanical brake apparatus provided in the first aspect of this application is short, the vehicle provided in the second aspect of this application also facilitates arrangement of wheel space, and therefore larger internal space or a more compact structure is obtained.

### BRIEF DESCRIPTION OF DRAWINGS

To describe technical solutions in this application more clearly, the following briefly describes accompanying drawings for describing implementations. Clearly, the accompanying drawings in the following descriptions are merely some implementations of this application, and a person of ordinary skill in the art may still derive other accompanying drawings from these accompanying drawings without creative efforts.
FIG. 1 is a diagram of a partial appearance structure of a wheel of a vehicle according to an embodiment of this application;
FIG. 2 is a diagram of a partial cross-sectional structure of a wheel of a vehicle according to an embodiment of this application;
FIG. 3 is a diagram of a cross-sectional structure of a drive mechanism in an electro-mechanical brake apparatus according to an embodiment of this application;
FIG. 4 is a diagram of a cross-sectional structure of a brake caliper in an electro-mechanical brake apparatus according to an embodiment of this application;
FIG. 5 is a diagram of a cross-sectional structure of an internal component of a housing in an electro-mechanical brake apparatus according to an embodiment of this application;
FIG. 6 is a diagram of a structure of cooperation between a brake motor and a locking mechanism in an electro-mechanical brake apparatus according to an embodiment of this application;
FIG. 7 is a diagram of an exploded structure of a brake motor and a locking mechanism in an electro-mechanical brake apparatus according to an embodiment of this application;
FIG. 8 is a diagram of a structure of cooperation between a brake motor and two ratchets in an electro-mechanical brake apparatus according to an embodiment of this application;
FIG. 9 is a diagram of a structure of cooperation between two ratchets in an electro-mechanical brake apparatus according to an embodiment of this application;
FIG. 10 is a diagram of a structure of cooperation between an axial driving piece and two ratchets in an electro-mechanical brake apparatus according to an embodiment of this application;
FIG. 11 is a diagram of a structure of another cooperation manner between an axial driving piece and two ratchets in an electro-mechanical brake apparatus according to an embodiment of this application;
FIG. 12 is a diagram of an assembly structure of a parking motor in an electro-mechanical brake apparatus according to an embodiment of this application;
FIG. 13 is an exploded diagram of an assembly structure of a parking motor in an electro-mechanical brake apparatus according to an embodiment of this application;
FIG. 14 is a diagram of a structure of another assembly manner of a parking motor in an electro-mechanical brake apparatus according to an embodiment of this application;
FIG. 15 is a diagram of structures of two ratchets in an electro-mechanical brake apparatus according to an embodiment of this application;
FIG. 16 is a diagram of a structure of cooperation between two ratchets and a circumferential limiting member in an electro-mechanical brake apparatus according to an embodiment of this application;
FIG. 17 is a diagram of a structure of two ratchets in an electro-mechanical brake apparatus in another embodiment according to an embodiment of this application;
FIG. 18 is a diagram of a structure of cooperation between two ratchets and a radial driving piece in an electro-mechanical brake apparatus according to an embodiment of this application;
FIG. 19 is an exploded diagram of a structure of cooperation between two ratchets and a radial driving piece in an electro-mechanical brake apparatus according to an embodiment of this application;
FIG. 20 is a diagram of a structure of a radial driving piece in an electro-mechanical brake apparatus according to an embodiment of this application;
FIG. 21 is a diagram of a structure of a driving state of a radial driving piece in an electro-mechanical brake apparatus according to an embodiment of this application;
FIG. 22 is a diagram of a structure of another driving state of a radial driving piece in an electro-mechanical brake apparatus according to an embodiment of this application;
FIG. 23 is a diagram of a structure of a driving state of a radial driving piece in an electro-mechanical brake apparatus in another embodiment according to an embodiment of this application;
FIG. 24 is a diagram of a structure of another driving state of a radial driving piece in an electro-mechanical brake apparatus in another embodiment according to an embodiment of this application;
FIG. 25 is a diagram of a structure of a radial driving piece in an electro-mechanical brake apparatus in an embodiment according to an embodiment of this application; and
FIG. 26 is a diagram of a cooperation structure of a radial driving piece in an electro-mechanical brake apparatus in an embodiment according to an embodiment of this application.

### DESCRIPTION OF EMBODIMENTS

The following describes technical solutions in embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

In this specification, the sequence numbers, such as "first" and "second", of components are merely intended to distinguish between the described objects, and do not have any sequential or technical meaning. Unless otherwise specified, the "connection" in this application includes a direct connection and an indirect connection. In descriptions of this application, it should be understood that orientation or position relationships indicated by the terms "above", "below", "front", "back", "top", "bottom", "inside", "outside", and the like are based on orientation or position relationships shown in the accompanying drawings, and are merely intended for ease of describing this application and simplifying descriptions, rather than indicating or implying that a described apparatus or element needs to have a specific orientation or needs to be constructed and operated in a specific orientation. Therefore, such terms shall not be understood as a limitation on this application.

In this application, unless otherwise specified and limited, when a first feature is "above" or "below" a second feature, the first feature may be in direct contact with the second feature, or the first feature may be in indirect contact with the second feature through an intermediate medium. In addition, that the first feature is "above" or "over" the second feature may be that the first feature is right above or obliquely above the second feature, or merely mean that a horizontal height of the first feature is greater than that of the second feature. That the first feature is "below" or "under" the second feature may be that the first feature is right below or obliquely below the second feature, or merely mean that a horizontal height of the first feature is less than that of the second feature.

This application provides an electro-mechanical brake apparatus with a radially integrated ratchet parking. The electro-mechanical brake apparatus provided in this application includes a brake motor, a one-way bearing, a bearing sleeve, a spacing base, and a driving piece. A motor shaft of the brake motor is configured to rotate in one direction and drive a friction plate to brake. The motor shaft includes a first section and a second section that are arranged in an axial direction, and a diameter of the first section is greater than a diameter of the second section. The one-way bearing is configured to couple an outer circumferential surface of the first section to limit rotation of the motor shaft in another direction. The one direction is opposite to the another direction. The bearing sleeve and the spacing base are sequentially arranged outside the one-way bearing in a radial direction of the brake motor, and the bearing sleeve is configured to be fastened to the one-way bearing. The spacing base is configured to limit an offset of the bearing sleeve in the radial direction of the brake motor, and is configured to limit, via the bearing sleeve, rotation of the one-way bearing in the another direction. The driving piece is configured to drive, via the bearing sleeve, the one-way bearing to move from the first section to the second section or move from the second section to the first section.

The electro-mechanical brake apparatus with the radially integrated ratchet parking provided in this application drives, via the brake motor, the friction plate to abut against a brake disc of a wheel, to implement braking. A structure of an axial driving piece is simple, and both a radial driving piece and a circumferential limiting member are located on sides of two ratchets in the radial direction of the brake motor. This compresses an axial size of the electro-mechanical brake apparatus in this application, and facilitates adaptation of the electro-mechanical brake apparatus to wheel space.

This application provides a vehicle. The vehicle includes a wheel, a vehicle frame, and the electro-mechanical brake apparatus provided in this application. The electro-mechanical brake apparatus is fastened to the vehicle frame and is located at the wheel, and the electro-mechanical brake apparatus brakes the wheel via an internal mechanism. An axial direction of a brake motor in the electro-mechanical brake apparatus is parallel to an axis of the wheel, and is used for slidable connection to the vehicle frame in the axial direction.

A motor shaft in the electro-mechanical brake apparatus is configured to rotate in one direction and drive a friction plate to slide in an axial direction of the wheel to abut against a brake disc.

Two ratchets in the electro-mechanical brake apparatus are configured to be engaged with each other to lock the friction plate.

The electro-mechanical brake apparatus in the vehicle provided in this application facilitates arrangement of wheel space, and therefore larger internal space or a more compact structure is obtained.

The vehicle provided in this application may include a plurality of electro-mechanical brake apparatuses, and each electro-mechanical brake apparatus corresponds to one wheel. The vehicle further includes a brake pedal, and the brake pedal is configured to control the plurality of electro-mechanical brake apparatuses to drive friction plates toward or away from brake discs of wheels.

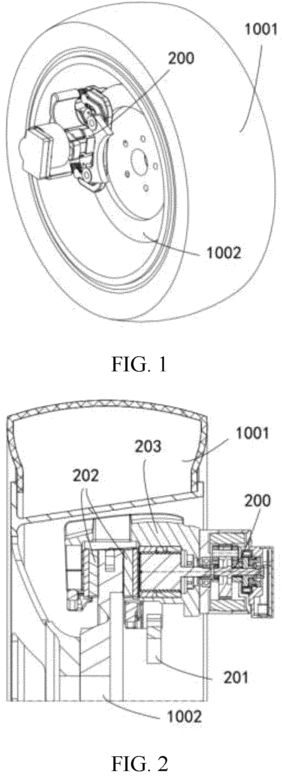

FIG. 1 is a diagram of a partial appearance structure of a wheel of a vehicle according to an embodiment of this application.

As shown in FIG. 1, a brake disc 1002 is disposed on a wheel 1001, and the brake disc 1002 is coaxially fastened to a wheel hub of the wheel 1001. The wheel 1001 rotates relative to a vehicle frame, and the brake disc 1002 synchronously rotates with the wheel 1001 relative to the vehicle frame. In the diagram of FIG. 1, an outer diameter size of the brake disc 1002 is less than an inner diameter size of an inner rim of the wheel, and the brake disc 1002 is accommodated in the inner rim of the wheel 1001.

An electro-mechanical brake apparatus 200 provided in this application is fastened to the vehicle frame. The electro-mechanical brake apparatus 200 at least partially extends into the inner rim of the wheel 1001, and cooperates with the brake disc 1002 to brake the wheel 1001.

FIG. 2 is a diagram of a partial cross-sectional structure of the wheel of the vehicle according to an embodiment of this application.

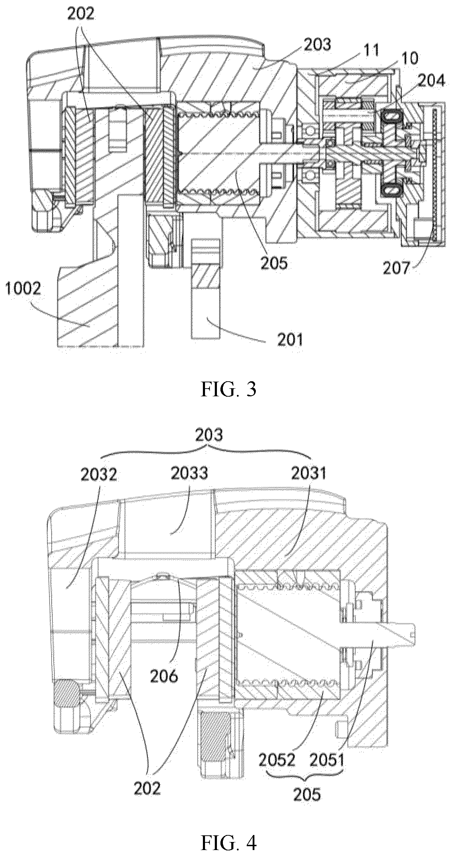

As shown in FIG. 2, the electro-mechanical brake apparatus 200 provided in this application includes a caliper holder 201, a friction plate 202, a brake caliper 203, and a drive mechanism. The drive mechanism includes a brake motor 10, a reducer 204, and a feed mechanism 205. For the feed mechanism 205, refer to FIG. 3. The caliper holder 201 is configured to be fastened to the vehicle frame, the brake caliper 203 is slidably connected to the caliper holder 201, and the drive mechanism is fastened to the brake caliper 203 and slides with the brake caliper 203 synchronously relative to the caliper holder 201. In some embodiments, the brake caliper 203 and the caliper holder 201 are slidably connected through a through hole and a sliding rod. In other words, the brake caliper 203 has one of the through hole and the sliding rod, and the caliper holder 201 has the other one of the through hole and the sliding rod. Relative sliding between the brake caliper 203 and the caliper holder 201 is implemented through axial sliding of the sliding rod in the through hole.

It should be noted that a sliding direction of the brake caliper 203 relative to the caliper holder 201 is parallel to an axial direction of the brake disc 1002. In other words, an axial direction of the brake motor 10 in the electro-mechanical brake apparatus 200 is parallel to an axis of the wheel 1001, and the brake motor 10 is configured to be slidably connected to the vehicle frame in an axial direction of the wheel 1001. In correspondence to the embodiment of cooperation between the through hole and the sliding rod, an axial direction of the through hole and an axis of the sliding rod are both parallel to the axial direction of the brake disc 1002.

The brake caliper 203 is configured to mount the friction plate 202 and the drive mechanism. There is at least one friction plate 202.

As shown in FIG. 2, in an embodiment, there are two friction plates 202. The brake motor 10 in the electro-mechanical brake apparatus 200 is configured to drive the at least one friction plate 202 to slide in the axial direction of the wheel 1001 to abut against the brake disc 1002. In this embodiment, the two friction plates 202 are respectively arranged on two sides of the brake disc 1002 in the axial direction of the brake disc 1002. The two friction plates 202 respectively face two opposite outer surfaces of the brake disc 1002. The drive mechanism is configured to drive the friction plate 202 to face or away from the brake disc 1002 of the vehicle. The drive mechanism may push, through an action of an internal mechanism and sliding relative to the caliper holder 201, the two friction plates 202 to slide toward each other and be in contact with the two opposite outer surfaces of the brake disc 1002, to generate friction to brake the brake disc 1002.

FIG. 3 is a diagram of a cross-sectional structure of the drive mechanism in the electro-mechanical brake apparatus 200 according to an embodiment of this application.

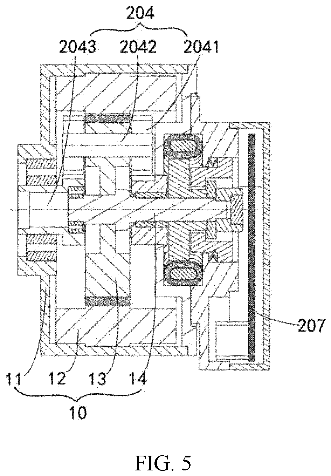

As shown in FIG. 3, the drive mechanism in this application includes the brake motor 10, the reducer 204, and the feed mechanism 205. The brake motor 10 includes a housing 11, and the housing 11 is fastened to the brake caliper 203 in the axial direction of the brake motor 10. Refer to FIG. 5. The housing 11 is configured to fasten a stator 12 of the brake motor 10. An inner cavity of the housing 11 is configured to accommodate the stator 12 and a rotor 13 of the brake motor 10. In some embodiments, the housing 11 of the brake motor 10 may be further configured to accommodate a gear group 2041 of the reducer 204. In other words, the gear group 2041 of the reducer 204 is integrated into the housing 11 of the brake motor 10, so that the internal mechanism of the electro-mechanical brake apparatus 200 is arranged more compactly, and an overall volume is reduced. The brake caliper 203 is configured to at least partially accommodate the feed mechanism 205. The brake caliper 203 is further configured to drive the housing 11 and slide relative to the caliper holder 201 in the axial direction of the brake disc 1002. The reducer 204 is configured to be in transmission connection to the feed mechanism 205 and the brake motor 10, and the brake motor 10 is configured to drive the reducer 204 to rotate to push the friction plate 202 and drive the brake caliper 203.

FIG. 4 is a diagram of a cross-sectional structure of the brake caliper 203 in the electro-mechanical brake apparatus according to an embodiment of this application.

The brake caliper 203 is roughly U-shaped, and the brake caliper 203 includes a main body part 2031, a pushing part 2032, and a connecting part 2033. The main body part 2031 and the pushing part 2032 are respectively arranged on the two sides of the brake disc 1002 in the axial direction of the brake disc 1002, and the main body part 2031 and the pushing part 2032 are further respectively arranged on two sides of the two friction plates 202 in the axial direction of the brake disc 1002. In other words, the main body part 2031, one friction plate 202, the brake disc 1002, the other friction plate 202, and the pushing part 2032 are sequentially arranged in the axial direction of the brake disc 1002. The connecting part 2033 is located on an outer side of the brake disc 1002 in a radial direction of the brake disc 1002, and the connecting part 2033 is configured to be fastened to the main body part 2031 and the pushing part 2032.

In an embodiment, the friction plate 202 located on a side that is of the brake disc 1002 and that is close to the main body part 2031 is slidably connected to the main body part 2031. In an embodiment, the friction plate 202 located on a side that is of the brake disc 1002 and that is close to the pushing part 2032 is fastened to the pushing part 2032.

The main body part 2031 is further configured to be slidably connected to the caliper holder 201. The feed mechanism 205 is at least partially accommodated in an inner cavity of the main body part 2031. The housing 11 is fastened on a side that is of the main body part 2031 and that is away from the pushing part 2032. The feed mechanism 205 is configured to be in transmission connection to the reducer 204, the main body part 2031 and the housing 11 each are provided with an avoidance hole, and the avoidance hole is used to avoid a transmission shaft between the feed mechanism 205 and the reducer 204. In some embodiments, the transmission shaft and an input shaft of the feed mechanism 205 may be of an integrated structure. In other words, the input shaft of the feed mechanism 205 may pass through the two avoidance holes and extend into the housing 11 to be in transmission connection to the reducer 204.

In some other embodiments, the transmission shaft and an output shaft of the reducer 204 may be of an integrated structure. In other words, the output shaft of the reducer 204 may pass through the two avoidance holes and extend into the inner cavity of the main body part 2031 to be in transmission connection to the feed mechanism 205.

The feed mechanism 205 includes a lead screw 2051 and a screw jacket 2052. The screw jacket 2052 is coaxially sleeved on an outer side of the lead screw 2051, and the lead screw 2051 is configured to be in coaxial transmission with the output shaft of the reducer 204. The output shaft of the reducer 204 drives the lead screw 2051 to rotate, to drive the screw jacket 2052 to slide. In this case, an end portion that is of the lead screw 2051 and that faces the reducer 204 may be considered as the input shaft of the feed mechanism 205.

Specifically, threads that cooperate with each other are provided on an outer circumferential surface of the lead screw 2051 and an inner circumferential surface of the screw jacket 2052. When the lead screw 2051 is driven by the reducer 204 to rotate along an axis of the lead screw 2051, the lead screw 2051 may drive the screw jacket 2052 to slide along the axis of the lead screw 2051. On a side that is of the screw jacket 2052 and that is away from the reducer 204, the screw jacket 2052, one friction plate 202, and the brake disc 1002 are sequentially arranged along the axis of the lead screw 2051. The lead screw 2051 drives the screw jacket 2052 to slide along the axis of the lead screw 2051, to drive the friction plate 202 to move relative to the brake disc 1002.

In an embodiment, one direction is a forward rotation of a motor shaft 14 of the brake motor 10, and another direction is a reverse rotation of the motor shaft 14 of the brake motor 10.

When the brake motor 10 rotates forward, the reducer 204 drives the lead screw 2051 to rotate forward along the axis of the lead screw 2051, and the screw jacket 2052 slides toward the brake disc 1002 along the axis of the lead screw 2051 and drives the friction plate 202 to be in contact with the brake disc 1002 to implement braking. When the brake motor 10 reverses, the reducer 204 drives the lead screw 2051 to reverse along the axis of the lead screw 2051, the screw jacket 2052 slides away from the brake disc 1002 along the axis of the lead screw 2051, and the friction plate 202 is released from the brake disc 1002.

In some embodiments, a separation spring 206 is further disposed between the two friction plates 202. Two opposite ends of the separation spring 206 respectively abut against the two friction plates 202. The separation spring 206 is configured to provide elastic force for the two friction plates 202 to get away from each other in an axial direction of the lead screw 2051, to ensure that after the screw jacket 2052 slides away from the brake disc 1002, the two friction plates 202 are separately released from contact with the brake disc 1002.

In some embodiments, a ball may be further disposed between the lead screw 2051 and the screw jacket 2052. For ease of description of an overall structure, the ball is not shown in the figure. There are a plurality of balls, and the balls abut between an outer circumferential surface thread of the lead screw 2051 and an inner circumferential surface thread of the screw jacket 2052. The ball is configured to reduce friction between the lead screw 2051 and the screw jacket 2052, and improve transmission efficiency of the drive mechanism.

FIG. 5 is a diagram of a cross-sectional structure of an internal component of the housing 11 in the electro-mechanical brake apparatus according to an embodiment of this application.

As shown in FIG. 5, in an embodiment, the stator 12 and the rotor 13 are coaxially arranged in a radial direction of the brake motor 10. The stator 12 is configured to drive the rotor 13 to rotate, to output power. The brake motor 10 further includes the motor shaft 14, and the motor shaft 14 is coaxially fastened to the rotor 13.

In the embodiment shown in FIG. 5, the brake motor 10 is an inner rotor motor, the stator 12 is coaxially sleeved on an outer side of the rotor 13, and the rotor 13 is located in a center hole of the stator 12. In this case, the housing 11 is configured to fasten the stator 12, and the stator 12 drives the rotor 13 to rotate in the central hole of the stator 12. In some other embodiments, the brake motor 10 may be an outer rotor motor, the rotor 13 is coaxially sleeved on an outer side of the stator 12, and the stator 12 is located in a center hole of the rotor 13. In this case, a structure of a support cylinder is disposed in the housing 11, the support cylinder is configured to fasten the stator 12, and the stator 12 drives the rotor 13 to rotate on the outer side of the stator 12.

The reducer 204 includes a transmission shaft 2042, a drive shaft 2043, and the gear group 2041. The transmission shaft 2042 is in transmission connection to the drive shaft 2043 via the gear group 2041. The transmission shaft 2042 is configured to be in transmission connection to the brake motor 10. The drive shaft 2043 is configured to be in transmission connection to the feed mechanism 205. Specifically, the transmission shaft 2042 of the reducer 204 is configured to drive the motor shaft 14 of the brake motor 10 in a transmission manner. The drive shaft 2043 of the reducer 204 is configured to coaxially drive the lead screw 2051 of the feed mechanism 205 in a transmission manner.

The gear group 2041 is configured to adjust a rotational speed output by the motor shaft 14 of the brake motor 10. In some embodiments, an axis of the transmission shaft 2042 in the reducer 204 is biased against an axis of the drive shaft 2043. A structure of the gear group 2041 is compact, and can provide a large reduction ratio. This is conducive to miniaturization of the drive mechanism in this application.

It should be noted that, in the diagrams of FIG. 3 and FIG. 5, the reducer 204 is a coaxial reducer, and the gear group 2041 is a planetary gear group. Such a structure can reduce a volume of the reducer 204. Therefore, the transmission shaft 2042 of the reducer 204 may be in transmission connection to the motor shaft 14 of the brake motor 10 via the planetary gear group. In this case, the motor shaft 14 and the transmission shaft 2042 are spaced from each other in the radial direction of the brake motor 10. In some other embodiments, the gear group 2041 of the reducer 204 may be a parallel shaft gear group. In this case, the transmission shaft 2042 of the reducer 204 and the motor shaft 14 of the brake motor 10 are coaxially driven in a transmission manner. The foregoing implementation does not affect function implementation of the electro-mechanical brake apparatus 200 in this application.

When the vehicle needs to be braked, the stator 12 of the brake motor 10 drives the rotor 13 to drive the motor shaft 14 to rotate forward. The motor shaft 14 drives the transmission shaft 2042 of the reducer 204 that is in transmission connection to the motor shaft 14 to synchronously rotate forward. The transmission shaft 2042 drives the drive shaft 2043 to rotate forward via the gear group 2041. The drive shaft 2043 drives the lead screw 2051 in the feed mechanism 205 that is in transmission connection to the drive shaft 2043 to synchronously rotate forward. The feed mechanism 205 is configured to convert a rotation action of the lead screw 2051 into a sliding action of the screw jacket 2052, in other words, the lead screw 2051 drives the screw jacket 2052 to slide along the axis of the lead screw 2051. A sliding direction of the screw jacket 2052 is a direction toward the brake disc 1002. The screw jacket 2052 pushes one friction plate 202 to move toward the brake disc 1002, and enables the friction plate 202 to be in contact with the brake disc 1002 to generate friction.

After the friction plate 202 that is close to the screw jacket 2052 is in contact with and abuts against the brake disc 1002, the stator 12 of the brake motor 10 continues to drive the rotor 13 to rotate forward, and the screw jacket 2052 continues to slide in the axial direction of the lead screw 2051 through a same power transfer path. Because a position of the brake disc 1002 is fixed, the screw jacket 2052, the friction plate 202, and the brake disc 1002 sequentially abut against each other. The screw jacket 2052 receives reverse abutting thrust from the brake disc 1002. An axial sliding action of the screw jacket 2052 relative to the lead screw 2051 is converted into a sliding action of the brake caliper 203 being reversely pushed by the screw jacket 2052 relative to the caliper holder 201. In other words, after the friction plate 202 that is close to the screw jacket 2052 is in contact with and abuts against the brake disc 1002, an axial size of the feed mechanism 205 further increases under an action of the brake motor 10, to reversely push the brake caliper 203 to slide relative to the caliper holder 201 in a direction toward the housing 11. The housing 11 synchronously slides with the brake caliper 203 in a direction away from the brake disc 1002.

Sliding of the brake caliper 203 in the direction toward the housing 11 may drive the pushing part 2032 to synchronously slide in a direction toward the housing 11. Because the pushing part 2032 is located on a side that is of the brake disc 1002 and that is away from the housing 11, a sliding direction of the pushing part 2032 is a direction toward the brake disc 1002. In other words, after the friction plate 202 that is close to the screw jacket 2052 is in contact with and abuts against the brake disc 1002, the feed mechanism 205 further drives the pushing part 2032 to slide toward the brake disc 1002. In this way, the pushing part 2032 drives the other friction plate 202 located on the same side to synchronously slide toward the brake disc 1002, and enables the other friction plate 202 to be in contact with the brake disc 1002 to generate friction.

Therefore, through an action of the internal mechanism of the drive mechanism, the friction plates 202 located on the two sides of the brake disc 1002 may be driven to slide oppositely and be respectively in contact with the two outer surfaces of the brake disc 1002 that face away from each other, to generate the friction to brake the brake disc 1002 and implement braking of the vehicle.

After the braking is completed, the stator of the brake motor 10 drives the rotor 13 to reverse. The rotor 13 sequentially drives the transmission shaft 2042 and the drive shaft 2043 of the reducer 204, and the lead screw 2051 of the feed mechanism 205 to reverse synchronously. Reverse rotation of the lead screw 2051 may drive the screw jacket 2052 to slide in the direction away from the brake disc 1002, so that a spacing between the two friction plates 202 increases, the two friction plates 202 are separately released from contact with the brake disc 1002 under an action of the separation spring 206, and the wheel 1001 continues to rotate and drives the vehicle to travel.

In some embodiments, the electro-mechanical brake apparatus 200 includes a reset spring, and the reset spring is arranged between the brake caliper 203 and the caliper holder 201. For ease of description of an overall structure, the reset spring is not shown in the figure. The reset spring is configured to drive the brake caliper 203 to slide relative to the caliper holder 201 in a direction away from the housing 11, to drive the pushing part 2032 to slide in a direction away from the brake disc 1002, to ensure that the two friction plates 202 are separately and reliably separated from the brake disc 1002.

Therefore, after the braking is completed, through the action of the internal mechanism of the drive mechanism, the friction plates 202 located on the two sides of the brake disc 1002 may be driven to slide oppositely and be respectively released from contact with the two outer surfaces of the brake disc 1002 that face away from each other, so that the wheel 1001 continues to rotate and drives the vehicle to travel.

In an embodiment, the drive mechanism includes a circuit board 207. The circuit board 207 is configured to fasten a drive circuit, and the drive circuit is configured to drive the brake motor 10. The circuit board 207 may be accommodated in the inner cavity of the housing 11 together with the brake motor 10, so that a signal transmission distance from the drive circuit to the brake motor 10 can be shortened, and internal line arrangement of the drive mechanism can be simplified. In addition, the housing 11 may provide reliable sealing protection effect for the circuit board 207.

In an embodiment, the drive mechanism includes a position sensor. The position sensor is configured to detect a rotation angle of the brake motor 10, to adjust a braking force value of the drive mechanism. The position sensor includes a stator and a rotor. The stator of the position sensor may be fastened to the housing 11, and the rotor of the position sensor may be in coaxial transmission with the motor shaft 14 of the brake motor 10 or the transmission shaft 2042 of the reducer 204. The stator of the position sensor is directly fastened to the housing 11, or may be fastened to the circuit board 207 and indirectly fastened to the housing 11 via the circuit board 207. The rotor of the position sensor is in coaxial transmission with the motor shaft 14 of the brake motor 10 or the drive shaft 2043 of the reducer 204.

Through cooperation between the stator and the rotor of the position sensor, a rotation angle of the motor shaft 14 of the brake motor 10 or the drive shaft 2043 of the reducer 204 in the inner cavity of the housing 11 may be detected. The position sensor is further in communication connection to the drive circuit on the circuit board 207. The drive circuit receives an angle signal detected by the position sensor, calculates a rotation angle of the rotor 13 in the brake motor 10, and adjusts the braking force value of the drive mechanism, in other words, adjusts braking intensity of the vehicle.

In an embodiment, the drive mechanism includes a locking mechanism. The locking mechanism is configured to lock or release the motor shaft 14 of the brake motor 10, or the locking mechanism is configured to lock or release the drive shaft 2043 of the reducer 204, so that the drive mechanism in this application further has a parking function. Specifically, in an embodiment, a part of the locking mechanism is fastened to the housing 11, and the other part acts on the motor shaft 14 of the brake motor 10 or the drive shaft 2043 of the reducer 204. When the friction plate 202 of the electro-mechanical brake apparatus 200 abuts against the brake disc 1002, the motor shaft 14 of the brake motor 10 or the drive shaft 2043 of the reducer 204 may be locked via the locking mechanism, to maintain a state in which the friction plate 202 abuts against the brake disc 1002. The brake disc 1002 no longer rotates, and the vehicle enters a parking state.

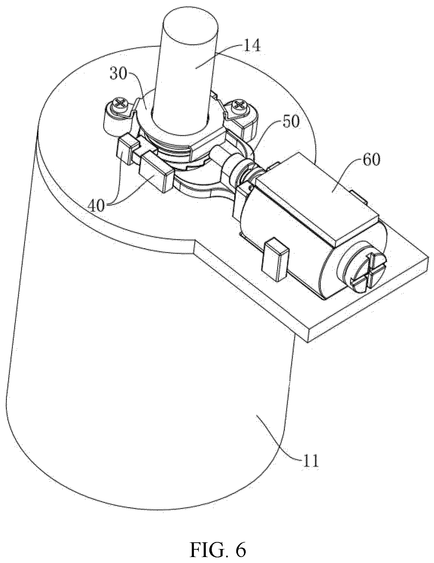

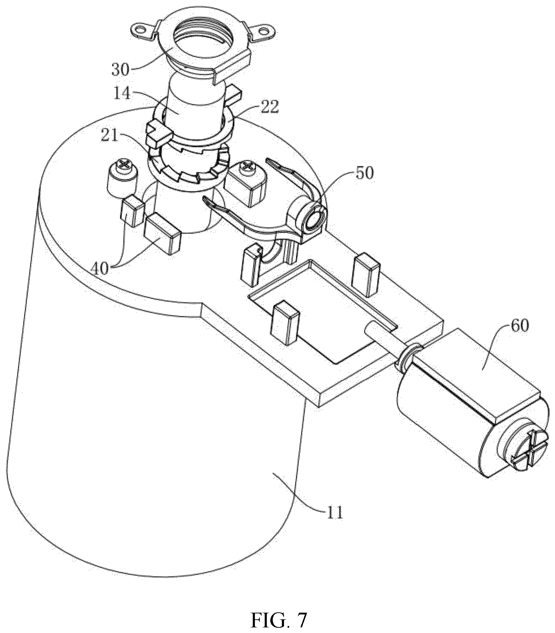

Refer to FIG. 6 and FIG. 7. FIG. 6 is a diagram of a structure in which the brake motor 10 in the drive mechanism of the electro-mechanical brake apparatus 200 cooperates with the locking mechanism according to this application.

FIG. 7 is a diagram of an exploded structure of the brake motor 10 and the locking mechanism.

The locking mechanism of the electro-mechanical brake apparatus 200 in this application uses a ratchet structure, and drives engagement of the ratchet structure in a radial direction. Specifically, the brake motor 10 includes one motor shaft. The motor shaft is a motor shaft of the brake motor 10. In some embodiments, when the housing 11 of the brake motor 10 further accommodates the gear group 2041 of the reducer 204, the motor shaft is the drive shaft 2043 extending out of the housing 11 of the brake motor 10.

For ease of description, in this embodiment of this application, an example in which the motor shaft is the motor shaft 14 connected to the rotor 13 is subsequently used for description.

In the electro-mechanical brake apparatus 200 with the radially integrated ratchet parking in this application, the motor shaft 14 of the brake motor 10 is configured to rotate in the one direction and drive the friction plate 202 to abut against the brake disc 1002. The one direction is "forward rotation" of the motor shaft 14.

In the axial direction of the brake motor 10, the motor shaft 14 at least partially extends out of the housing 11. The locking mechanism includes two ratchets, an axial driving piece 30, a circumferential limiting member 40, and a radial driving piece 50. The two ratchets are arranged opposite to each other in the axial direction of the brake motor 10. One ratchet is configured to be in transmission connection to the motor shaft 14, and the other ratchet is configured to engage with the one ratchet. For ease of description, the one ratchet is defined as a first ratchet 21, and the other ratchet is defined as a second ratchet 22.

The axial driving piece 30 is configured to drive, in the axial direction of the brake motor 10, the other ratchet to engage with the one ratchet, and the circumferential limiting member 40 is configured to limit a rotation angle of the other ratchet in the two engaged ratchets in the another direction. The one direction is opposite to the another direction. The radial driving piece 50 is configured to slide in the radial direction of the brake motor 10 and drive the other ratchet to move away from the one ratchet in the axial direction of the brake motor 10 to disengage the one ratchet.

The first ratchet 21 is in transmission connection to the motor shaft 14, and this is implemented by sleeving the first ratchet 21 on the motor shaft 14 and fastening an inner circumferential surface of the first ratchet 21 to an outer circumferential surface of the motor shaft 14.

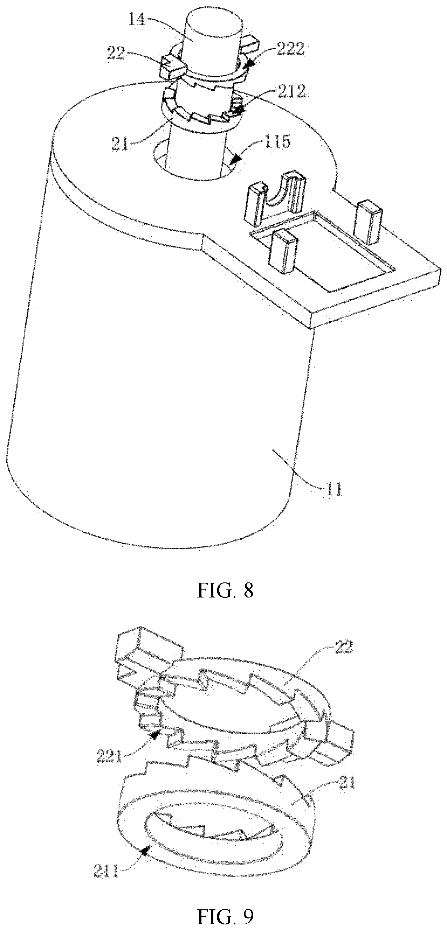

Specifically, FIG. 8 is a diagram of a structure of cooperation between the brake motor 10 and the two ratchets.

In this embodiment, in the axial direction of the brake motor 10, the first ratchet 21 and the second ratchet 22 are sequentially sleeved on the motor shaft 14. The inner circumferential surface of the first ratchet 21 may be fastened to the outer circumferential surface of the motor shaft 14 through interference fit, and the inner circumferential surface of the first ratchet 21 may be further fastened to the outer surface of the motor shaft 14 through bonding, for example, a flat key manner or a spline manner is used. An inner hole of the second ratchet 22 is sleeved on the motor shaft 14, and an inner circumferential surface of the second ratchet 22 is configured to abut against the outer circumferential surface of the motor shaft 14 and slide in the axial direction of the brake motor 10.

In an embodiment, one end face of the one ratchet and one end face of the other ratchet are arranged opposite to each other, the one end face of the one ratchet includes a circle of unidirectional meshing teeth, the one end face of the other ratchet includes another circle of unidirectional meshing teeth, and the circle of unidirectional meshing teeth is configured to engage with the another circle of unidirectional meshing teeth to limit a rotation angle of the one ratchet in the another direction.

The other end face of the one ratchet and the other end face of the other ratchet are arranged away from each other, and the other end face of the other ratchet is configured to be driven by the axial driving piece 30.

For further cooperation, refer to a diagram of a structure of cooperation between the two ratchets shown in FIG. 9.

Specifically, the first ratchet 21 includes two opposite end faces. In this embodiment, the two opposite end faces of the first ratchet 21 are defined as a first end face 211 and a second end face 212. The second ratchet 22 includes two opposite end faces. In this embodiment, the two opposite end faces of the second ratchet 22 are defined as a third end face 221 and a fourth end face 222. In the axial direction of the brake motor 10, the first end face 211, the second end face 212, the third end face 221, and the fourth end face 222 are sequentially arranged.

The second end face 212 and the third end face 221 are two end faces that are of the first ratchet 21 and the second ratchet 22 and that are opposite to each other in the axial direction of the brake motor 10. The second end face 212 includes the circle of unidirectional meshing teeth, and the third end face 221 includes the another circle of unidirectional meshing teeth. The circle of unidirectional meshing teeth of the second end face 212 is configured to engage with the another circle of unidirectional meshing teeth of the third end face 221, to limit a rotation angle of reverse rotation of the first ratchet 21.

The first end face 211 and the fourth end face 222 are arranged away from each other in the axial direction of the brake motor 10. The fourth end face 222 is further configured to be driven by the axial driving piece 30, to slide toward the first ratchet 21, so that the two ratchets are engaged with each other.

Because the first ratchet 21 is in transmission connection to the motor shaft 14, when the first ratchet 21 is engaged with the second ratchet 22, the two circles of unidirectional meshing teeth may limit reverse rotation of the first ratchet 21 relative to the second ratchet 22. In other words, the two ratchets are engaged with each other through the unidirectional meshing teeth, to limit a rotation angle of the first ratchet 21 relative to the second ratchet 22 in the another direction. Because the second ratchet 22 limits an angle of reverse rotation via the circumferential limiting member 40, the circumferential limiting member 40 limits reverse rotation of the motor shaft 14 through cooperation between the two ratchets.

After the motor shaft 14 rotates forward to drive the friction plate 202 to abut against the brake disc 1002, the two ratchets in the electro-mechanical brake apparatus 200 are configured to engage with each other to lock the at least one friction plate 202. In other words, the locking mechanism limits reverse rotation of the motor shaft 14 through engagement of the two ratchets to cooperate with the circumferential limiting member 40. In this way, the locking mechanism can maintain a state in which the friction plate 202 abuts against the brake disc 1002, and limit rotation of the wheel 1001 to implement a parking function.

In some scenarios, due to a phenomenon such as thermal expansion and contraction, or stress release inside the electro-mechanical brake apparatus 200, a gap may occur during cooperation between the electro-mechanical brake apparatus 200 and the brake disc 1002. In this case, because the first ratchet 21 and the second ratchet 22 are engaged with each other via the two circles of unidirectional meshing teeth, the motor shaft 14 rotates in a forward direction. In other words, forward rotation of the motor shaft 14 is not limited by the two ratchets that are engaged with each other. The forward rotating motor shaft 14 further pushes the friction plate 202 to compensate for the gap between the friction plate 202 and the brake disc 1002, to maintain clamping force of the electro-mechanical brake apparatus 200 on the brake disc 1002, to improve reliability of a parking function of the electro-mechanical brake apparatus 200 in this application.

In an embodiment, the housing 11 of the brake motor 10 includes a motor end cover 111 and a stator sleeve 112. In the axial direction of the brake motor 10, the motor end cover 111 is arranged on one side of the stator 12 of the brake motor 10, and the motor shaft 14 passes through a shaft hole of the motor end cover 111. The two ratchets are arranged on a side that is of the motor end cover 111 and that is away from the stator 12. In the radial direction of the brake motor 10, a size of each ratchet is less than a size of the motor end cover 111.

The stator sleeve 112 is configured to fasten and accommodate the stator 12 of the brake motor 10. The stator sleeve 112 is fastened to the motor end cover 111. The stator sleeve 112 is located on a side that is of the motor end cover 111 and that is away from the two ratchets.

In this embodiment, the two ratchets are located on an outer side of the housing 11 of the brake motor 10 in the axial direction of the brake motor 10. Correspondingly, the axial driving piece 30, the circumferential limiting member 40, and the radial driving piece 50 are also located on the outer side of the housing 11 of the brake motor 10. The locking mechanism does not occupy internal space of the housing 11 of the brake motor 10. Therefore, an internal structure of the brake motor 10 is compact. Each of outer diameters of the two ratchets is less than an outer diameter of the motor end cover 111, so that radial sizes of the two ratchets can be further controlled. This facilitates miniaturization of the electro-mechanical brake apparatus 200.

In some other embodiments, the two ratchets, the corresponding axial driving piece 30, the circumferential limiting member 40, and the radial driving piece 50 are located inside and outside the housing 11 of the brake motor 10. For example, the two ratchets are located between the stator 12 and the motor end cover 111, or the two ratchets are located on a side that is of the stator 12 and that is away from the motor end cover 111. The two ratchets in the housing 11 may also implement the parking function by limiting reverse rotation of the motor shaft 14, and internal components of the housing 11 are arranged more compactly. This improves integration of the electro-mechanical brake apparatus 200.

In addition, in the diagram of FIG. 8, the motor end cover 111 includes an axial groove 115, and the axial groove 115 extends toward the stator 12 in the axial direction of the brake motor 10. A diameter of the axial groove 115 is greater than an outer diameter of the first ratchet 21, and the axial groove 115 may be configured to at least partially accommodate the first ratchet 21 to reduce an axial size of the electro-mechanical brake apparatus 200.

In the embodiment shown in FIG. 8, the motor shaft 14 partially extends out of the motor end cover 111, and an end portion on a side that is of the motor shaft 14 and that is away from the stator sleeve 112 is configured to drive the lead screw 2051 of the feed mechanism 205 to rotate. The two ratchets are sequentially sleeved on a part that is of the motor shaft 14 and that extends out of the motor end cover 111. It may be understood that, in an embodiment, in the axial direction of the brake motor 10, the first ratchet 21 is arranged between the motor end cover 111 and the second ratchet 22. In some other embodiments, in the axial direction of the brake motor 10, the second ratchet 22 is arranged between the motor end cover 111 and the first ratchet 21.

Specifically, in an embodiment, the axial driving piece 30 includes a pressing plate 31 and an elastic member 32, and an end face that is of the motor end cover 111 and that is away from the stator 12 is further configured to be fastened to the pressing plate 31.

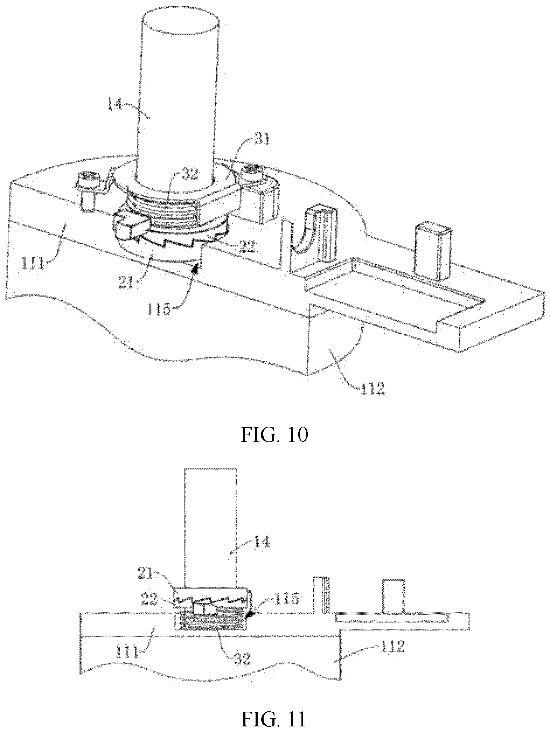

Refer to the structure shown in FIG. 10. In the axial direction of the brake motor 10, the one ratchet is arranged between the other ratchet and the motor end cover 111, and the elastic member 32 is connected between the other ratchet and the pressing plate 31.

In this case, in the axial direction of the brake motor 10, the motor end cover 111, the one ratchet, the other ratchet, the elastic member 32, and the pressing plate 31 are sequentially arranged. The first end face 211 of the first ratchet 21 faces the motor end cover 111, and the fourth end face 222 of the second ratchet 22 faces away from the motor end cover 111, and is configured to be driven by the axial driving piece 30.

Specifically, the elastic member 32 and the pressing plate 31 are sequentially arranged on a side that is of the fourth end face 222 and that is away from the motor end cover 111, and the elastic member 32 is configured to abut against, in the axial direction of the brake motor 10, the fourth end face 222 of the second ratchet 22 and a surface that is of the pressing plate 31 and that faces the motor end cover 111. The elastic member 32 is configured to drive, in the axial direction of the brake motor 10, the second ratchet 22 to slide toward the first ratchet 21, so that the two ratchets are engaged with each other.

In another embodiment, one axial driving piece 30 includes an elastic member 32. In the axial direction of the brake motor 10, the other ratchet is arranged between the one ratchet and the motor end cover 111, and the elastic member 32 is connected between the other ratchet and the end face that is of the motor end cover 111 and that is away from the stator 12.

Refer to the structure shown in FIG. 11. In the axial direction of the brake motor 10, the motor end cover 111, the elastic member 32, the other ratchet, and the one ratchet are sequentially arranged. The first end face 211 of the first ratchet 21 faces away from the motor end cover 111, and the fourth end face 222 of the second ratchet 22 faces the motor end cover 111, and is configured to be driven by the axial driving piece 30.

Specifically, the elastic member 32 is arranged between the fourth end face 222 of the second ratchet 22 and the motor end cover 111. Two ends of the elastic member 32 are configured to abut against the fourth end face 222 of the second ratchet 22 and the motor end cover 111 in the axial direction of the brake motor 10, and the elastic member is configured to drive, in the axial direction of the brake motor 10, the second ratchet 22 to slide toward the first ratchet 21, so that the two ratchets are engaged with each other.

In the foregoing two embodiments, the axial driving piece 30 has a simple structure, and occupies small space in the axial direction of the brake motor 10. This helps compress the axial size of the electro-mechanical brake apparatus 200.

In an embodiment, the locking mechanism includes a parking motor 60. The parking motor 60 is configured to be in transmission connection to the radial driving piece 50, to drive the radial driving piece 50 to move in the radial direction of the brake motor 10.

In an embodiment, an outer circumferential surface of the motor end cover 111 or an outer circumferential surface of the stator sleeve 112 includes a radial boss 113. An extension direction of the radial boss 113 in the radial direction of the brake motor 10 is away from the motor shaft 14. The radial boss 113 is configured to fasten the parking motor 60, and the parking motor 60 is configured to drive the radial driving piece 50.

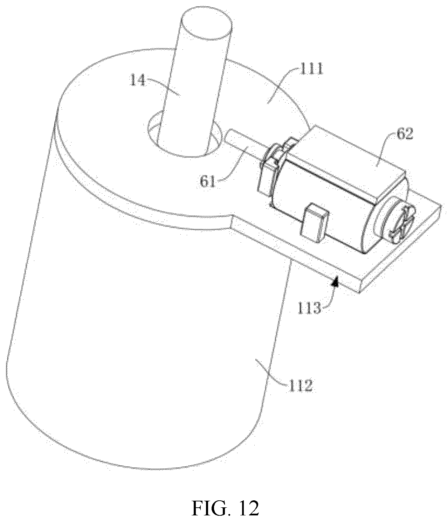

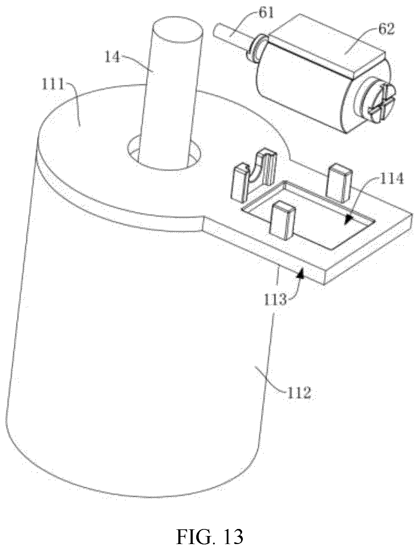

Specifically, refer to FIG. 12 and FIG. 13. In the diagram of FIG. 12, the outer circumferential surface of the motor end cover 111 is configured to form the radial boss 113. In addition, in the diagram of FIG. 12, an axial direction of the parking motor 60 is parallel to the radial direction of the brake motor 10. In other words, the axial direction of the parking motor 60 is perpendicular to the axial direction of the motor shaft 14. The parking motor 60 includes an output shaft 61, and an axial direction of the output shaft 61 is parallel to the axial direction of the parking motor 60. The parking motor 60 is in transmission connection to the radial driving piece 50 via the output shaft 61, and drives the radial driving piece 50 to slide, in the radial direction of the brake motor 10, toward or away from the two ratchets, to disengage the two ratchets or enable the two ratchets to engage with each other. Because the parking motor 60 is disposed in the axial direction of the brake motor 10, the axial size of the electro-mechanical brake apparatus 200 can be reduced.

In an embodiment, the radial boss 113 includes an accommodating groove 114. The parking motor 60 includes a motor housing 62 and the output shaft 61. The output shaft 61 extends out of the motor housing 62 in the radial direction of the brake motor 10 and is configured to drive the radial driving piece 50. In the axial direction of the brake motor 10, a groove opening of the accommodating groove 114 faces the parking motor 60, and a sum of a groove depth of the accommodating groove 114 and a distance between the output shaft 61 and the motor end cover 111 is greater than or equal to a radius of the motor housing 62. In the radial direction of the brake motor 10, a length of the accommodating groove 114 is greater than or equal to a length of the motor housing 62.

The parking motor 60 also includes a stator and a rotor. For ease of description of an overall structure, the stator and the rotor are not shown in the figure. The motor housing 62 of the parking motor 60 is configured to accommodate the stator and the rotor. Therefore, a size of the motor housing 62 of the parking motor 60 is large. However, sizes of the two ratchets are small. In a process in which the output shaft 61 of the parking motor 60 drives the two ratchets to be separated or approached via the radial driving piece 50, the distance between the output shaft 61 and the motor end cover 111 is small. Therefore, in this embodiment, the accommodating groove 114 is disposed on the radial boss 113, and it is set that the sum of the groove depth of the accommodating groove 114 and the distance between the output shaft 61 and the motor end cover 111 in the axial direction of the brake motor 10 is greater than or equal to the radius of the motor housing 62. In the radial direction of the brake motor 10, the length of the accommodating groove 114 is greater than or equal to the length of the motor housing 62.

The accommodating groove 114 can accommodate a partial structure of the parking motor 60, so that the output shaft 61 of the parking motor 60 is close to the motor end cover 111 in the axial direction of the brake motor 10. In this way, space occupied by the parking motor 60 in the axial direction of the brake motor 10 is reduced. The two ratchets are also closer to the motor end cover 111 of the brake motor 10, and an internal structure of the electro-mechanical brake apparatus 200 is more compactly arranged and the axial size is smaller.

In an embodiment, the axial direction of the parking motor 60 is parallel to the axial direction of the brake motor 10, and the parking motor 60 and the brake motor 10 are located on a same side of the two ratchets in the axial direction of the brake motor 10. In this case, the output shaft 61 of the parking motor 60 passes through the radial boss 113 in the radial direction of the brake motor 10, and is in transmission connection to the radial driving piece 50. For example, the radial driving piece 50 may be of a structure like a cam or a connecting rod, to be driven by the output shaft 61 of the parking motor 60 and slide toward the two ratchets.

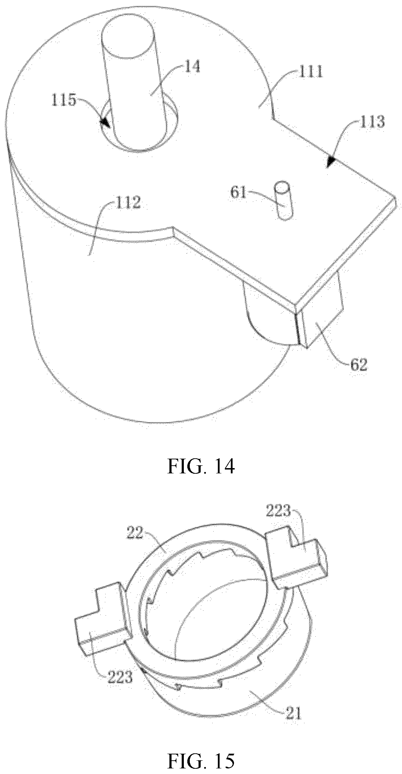

Specifically, refer to the diagram of FIG. 14. In this embodiment, the brake motor 10, the brake caliper 203, and the parking motor 60 are arranged in a "U" shape. The parking motor 60 is arranged on one side of the housing 11 in the radial direction of the brake motor 10. In this case, the parking motor 60 is located on a side that is of the motor end cover 111 and that is away from the brake caliper 203, and a size of the parking motor 60 is usually less than a size of the brake motor 10. The parking motor 60 and the brake motor 10 are arranged in the radial direction of the brake motor 10, and the parking motor 60 does not occupy additional space in the axial direction of the brake motor 10. The two ratchets are also closer to the motor end cover 111 of the brake motor 10, and the internal structure of the electro-mechanical brake apparatus 200 is more compactly arranged and the axial size is smaller.

In an embodiment, an outer circumferential surface of the other ratchet includes at least one of at least one radial groove or at least one radial protrusion.

Specifically, refer to FIG. 15. In the diagram of FIG. 15, the outer circumferential surface of the second ratchet 22 includes at least one radial protrusion 223. The radial protrusion 223 extends in the radial direction of the brake motor 10 in a direction away from the motor shaft 14, and a distance between the motor shaft 14 and an end portion that is of each radial protrusion 223 and that is away from the motor shaft 14 is greater than a radius of the one ratchet. In other words, each radial protrusion 223 in the second ratchet 22 extends out of the first ratchet 21 in the radial direction of the brake motor 10. One or more radial protrusions 223 that at least partially extend out of the first ratchet 21 are formed on the outer circumferential surface of the second ratchet 22, and each radial protrusion 223 may be configured to abut against the circumferential limiting member 40 in a circumferential direction of the brake motor 10. The circumferential limiting member 40 abuts against the radial protrusions 223 to limit reverse rotation of the second ratchet 22.

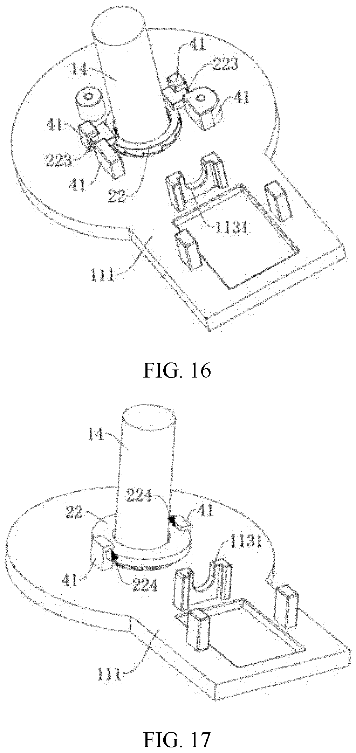

Specifically, refer to FIG. 16. The circumferential limiting member 40 includes at least one limiting protrusion 41. In the diagram of FIG. 16, the end face that is of the motor end cover 111 and that is away from the stator 12 includes at least one axial protrusion, and the at least one axial protrusion is configured to form the circumferential limiting member 40. In other words, in an embodiment, the limiting protrusion 41 of the circumferential limiting member 40 extends in the axial direction of the brake motor 10. One end of the limiting protrusion 41 is configured to be fastened to the motor end cover 111, and the other end is configured to extend toward the second ratchet 22, to abut against each radial protrusion 223 of the second ratchet 22 in the circumferential direction of the brake motor 10. The limiting protrusion 41 of the circumferential limiting member 40 is the axial protrusion on the motor end cover 111.

In this embodiment, in the radial direction of the brake motor 10, a spacing between each limiting protrusion 41 and the motor shaft 14 is greater than the radius of the first ratchet 21 and greater than a radius of the outer circumferential surface of the second ratchet 22. The limiting protrusion 41 can avoid an outer circumferential surface of the first ratchet 21 and the outer circumferential surface of the second ratchet 22. Each limiting protrusion 41 is configured to abut against the radial protrusion 223 on the outer circumferential surface of the second ratchet 22 in the circumferential direction of the brake motor 10. Each limiting protrusion 41 is fastened to the motor end cover 111 and extends in the axial direction of the brake motor 10, so that the motor end cover 111 and the radial protrusion 223 on the second ratchet 22 abut against each other in the circumferential direction of the brake motor 10. This further limits a rotation angle of the second ratchet 22 relative to the brake motor 10.

In another embodiment, the outer circumferential surface of the second ratchet 22 includes at least one radial groove 224. In the radial direction of the brake motor 10, a distance between a groove opening of each radial groove 224 and the motor shaft 14 is greater than the radius of the first ratchet 21, and a distance between a groove bottom of each radial groove 224 and the motor shaft 14 is less than or equal to the radius of the first ratchet 21.

Specifically, refer to FIG. 17. In the radial direction of the brake motor 10, the spacing between each limiting protrusion 41 and the motor shaft 14 is greater than the radius of the first ratchet 21 and less than a radius of the second ratchet 22. Each limiting protrusion 41 is configured to be embedded into the radial groove 224 on the outer circumferential surface of the second ratchet 22.

In this embodiment, a diameter of the second ratchet 22 is greater than a diameter of the first ratchet 21, and one or more radial grooves 224 that at least partially extend out of the first ratchet 21 are formed on the outer circumferential surface of the second ratchet 22. Each radial groove 224 may be configured to accommodate the limiting protrusion 41 in the circumferential limiting member 40, and the limiting protrusion 41 is configured to abut against a groove wall of the radial groove 224 in the circumferential direction of the brake motor 10, to limit reverse rotation of the second ratchet 22.

In an embodiment, the outer circumferential surface of the second ratchet 22 includes at least one radial protrusion 223 and at least one radial groove 224. In this case, the diameter of the second ratchet 22 is greater than the diameter of the first ratchet 21. A distance between the motor shaft 14 and each limiting protrusion 41 in the circumferential limiting member 40 is greater than the radius of the first ratchet 21, to avoid the first ratchet 21.

A distance between a part of the limiting protrusion 41 and the motor shaft 14 is less than the radius of the outer circumferential surface of the second ratchet 22, and the part of the limiting protrusion 41 is configured to be embedded into each radial groove 224. A distance between the other part of the limiting protrusion 41 and the motor shaft 14 is greater than the radius of the outer circumferential surface of the second ratchet 22, to avoid the outer circumferential surface of the second ratchet 22 and abut against each radial protrusion 223.

It may be understood that, in some embodiments, in the circumferential direction of the brake motor 10, one limiting protrusion 41 is disposed on each of two sides of each radial protrusion 223, and the two limiting protrusions 41 are configured to limit a rotation angle of the second ratchet 22 in the circumferential direction of the brake motor 10. In this case, the two limiting protrusions 41 may further guide the second ratchet 22, so that the second ratchet 22 always maintains a fixed angle relative to the motor shaft 14 in a process of sliding in the axial direction of the brake motor 10. This avoids a phenomenon that the motor shaft 14 may be reversed due to angle deflection of the second ratchet 22.

In an embodiment, the outer circumferential surface of the second ratchet 22 includes at least one radial protrusion 223, and the at least one radial protrusion 223 includes at least one first radial protrusion 223a. An extension direction of each first radial protrusion 223a intersects a sliding direction of the radial driving piece 50. In the radial direction of the brake motor 10, a distance between the motor shaft 14 and an end portion that is of each first radial protrusion 223a and that is away from the motor shaft 14 is greater than a spacing distance between the radial driving piece 50 and the motor shaft 14.

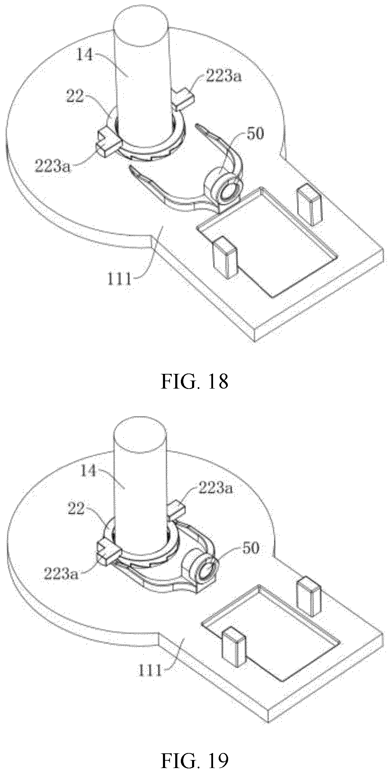

Specifically, refer to FIG. 18 and FIG. 19. In this embodiment, the outer circumferential surface of the second ratchet 22 includes two first radial protrusions 223a, the two first radial protrusions 223a are disposed opposite to each other in a same direction, and the two first radial protrusions 223a respectively extend away from each other in a same direction. In an embodiment, as shown in FIG. 18, the two first radial protrusions 223a extend away from each other in a direction perpendicular to the sliding direction of the radial driving piece 50.

In the direction perpendicular to the sliding direction of the radial driving piece 50, an extension length of each first radial protrusion 223a exceeds the spacing distance between the radial driving piece 50 and the motor shaft 14. Therefore, in the axial direction of the brake motor 10, an end face that is of each first radial protrusion 223a and that faces the first ratchet 21 may be configured to abut against the radial driving piece 50 and be driven by the radial driving piece 50.

In other words, the first radial protrusion 223a on the outer circumferential surface of the second ratchet 22 is configured to extend into a sliding track of the radial driving piece 50 relative to the housing 11 of the brake motor 10. An end face that is of the first radial protrusion 223a and that faces the first ratchet 21 in the axial direction of the brake motor 10 is configured to be driven by the radial driving piece 50, and the second ratchet 22 is driven to slide in the axial direction of the brake motor 10 in a direction away from the first ratchet 21. In a process in which the radial driving piece 50 slides in the radial direction of the brake motor 10, the two ratchets are disengaged by abutting against the first radial protrusion 223a.

It may be understood that, in this embodiment, the first radial protrusion 223a separately limits the second ratchet 22 in the circumferential direction of the brake motor 10 and enables the second ratchet 22 to slide in the axial direction of the brake motor 10. The second ratchet 22 also simplifies a structure of the second ratchet 22 and facilitates manufacturing by integrating the two different functions on the first radial protrusion 223a.

In an embodiment, the radial protrusion 223 on the second ratchet 22 is adjacently fastened to a gear ring of the unidirectional meshing teeth in the second ratchet 22 in the axial direction of the brake motor 10. The radial protrusion 223 and the gear ring of the unidirectional meshing teeth are separately manufactured and then fastened to form the second ratchet 22. When the radial protrusion 223 and the gear ring of the unidirectional meshing teeth are separately manufactured, respective structures of the radial protrusion 223 and the gear ring of the unidirectional meshing teeth are simple, so that manufacturing costs of the second ratchet 22 can be reduced.

In an embodiment, the radial driving piece 50 includes a nut 52 and at least one radial push rod 51. In the radial direction of the brake motor 10, one end of each radial push rod 51 is configured to be fastened to the nut 52, and the other end is configured to extend toward the two ratchets. The nut 52 is configured to receive driving force to push the at least one radial push rod 51 to slide synchronously.

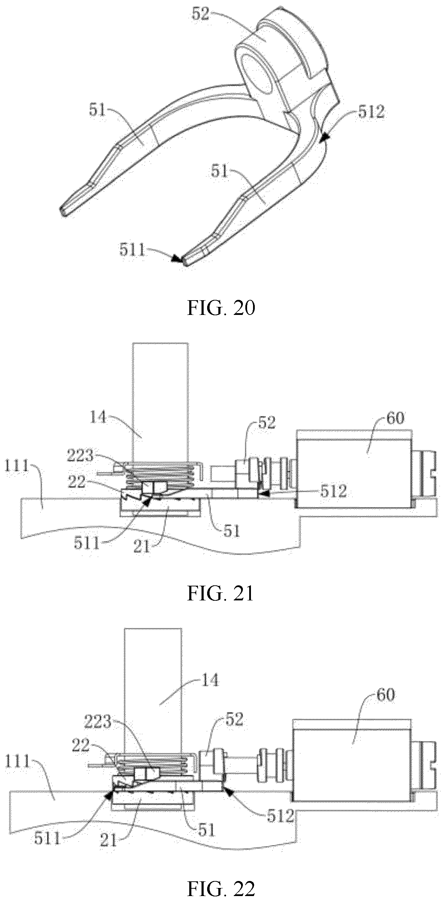

Specifically, refer to FIG. 20. In the embodiment shown in FIG. 20, the radial driving piece 50 includes one nut 52 and two radial push rods 51. The two radial push rods 51 both extend in the radial direction of the brake motor 10. End portions that are of the two radial push rods 51 and that face the nut 52 are separately fastened to the nut 52. The nut 52 and the two ratchets are spaced from each other in the radial direction of the brake motor 10, and end portions that are of the two radial push rods 51 and that are away from the nut 52 are configured to extend toward the two ratchets.

In the radial direction of the brake motor 10, each radial push rod 51 includes a first end 511 and a second end 512 that are opposite to each other. The first end 511 is defined to face the two ratchets, and the second end 512 is configured to be fastened to the nut 52. In the diagram of FIG. 20, the two radial push rods 51 are spaced from each other in the direction perpendicular to the sliding direction of the radial driving piece 50. A distance between each radial push rod 51 and the motor shaft 14 is greater than the radius of the first ratchet 21, and is less than a maximum radius between the second ratchet 22 and one motor shaft 14.

It may be understood that, when the outer circumferential surface of the second ratchet 22 includes at least one radial protrusion 223, the distance between each radial push rod 51 and the motor shaft 14 is less than a maximum distance between the radial protrusion 223 and the motor shaft 14. The radial push rod 51 abuts against the radial protrusion 223 and drives the second ratchet 22 to slide. When the outer circumferential surface of the second ratchet 22 includes at least one radial groove 224, the distance between each radial push rod 51 and the motor shaft 14 is less than the radius of the outer circumferential surface of the second ratchet 22. The radial push rod 51 abuts against the end face that is of the second ratchet 22 and that faces the first ratchet 21 in the axial direction of the brake motor 10, and drives the second ratchet 22 to slide.

In another description manner, the distance between each radial push rod 51 and the motor shaft 14 is greater than the radius of the first ratchet 21, so that each radial push rod 51 can avoid the first ratchet 21. The distance between each radial push rod 51 and the motor shaft 14 is less than the maximum radius between the second ratchet 22 and the motor shaft 14, so that it can be ensured that each radial push rod 51 is at least partially in contact with the second ratchet 22 and pushes the second ratchet 22.

In an embodiment, a height difference between the first end 511 and the second end 512 of each radial push rod 51 is greater than an engagement depth of the two ratchets. It may be understood that the nut 52 is configured to push each radial push rod 51 to slide synchronously, and each radial push rod 51 is configured to abut against the second ratchet 22 in the axial direction of the brake motor 10 and push the second ratchet 22 to slide. The height difference between the first end 511 and the second end 512 of each radial push rod 51 is greater than the engagement depth of the two ratchets, to ensure that the second ratchet 22 is completely pushed away from the first ratchet 21 in the axial direction of the brake motor 10. In this way, an engaged state between the two ratchets is released.

In an implementation, in the axial direction of the brake motor 10, a thickness of the first end 511 is less than a thickness of the second end 512. In this case, as shown in FIG. 21, the nut 52 drives the first end 511 of each radial push rod 51 to first contact with the second ratchet 22. In addition, each radial push rod 51 is further pushed in a direction toward the two ratchets, so that the second end 512 is in contact with the second ratchet 22. As shown in FIG. 22, the second ratchet 22 is driven to slide in a direction away from the first ratchet 21 to disengage the two ratchets that are engaged with each other. The second ratchet 22 may alternatively be in contact with a part that is of the radial push rod 51 and that is close to the second end 512, or a middle section that is of the radial push rod 51 and that has a same height as the second end 512, and effect is the same.

In an implementation, in the axial direction of the brake motor 10, the thickness of the first end 511 is greater than the thickness of the second end 512. In this case, the first end 511 is located in an extension direction of the nut 52 toward the two ratchets. The nut 52 drives the second end 512 of each radial push rod 51 to first contact the second ratchet 22, and pulls each radial push rod 51 in a direction toward the nut 52. In this way, the first end 511 at a remote end of each radial push rod 51 is in contact with the second ratchet 22, and the second ratchet 22 is driven to slide in a direction away from the first ratchet 21 to disengage the two ratchets that are engaged with each other.

Both the foregoing two structures can implement a function of the radial driving piece 50.

In an embodiment, each radial push rod 51 includes a slope section, a thickness of the slope section gradually increases in the axial direction of the brake motor 10, and the slope section is configured to connect the first end 511 and the second end 512. A surface that is of the slope section and that faces the second ratchet 22 may be a slope or an arc surface, and the thickness of the slope section gradually changes, so that each radial push rod 51 smoothly pushes the second ratchet 22.

In an embodiment, in the axial direction of the brake motor 10, the first ratchet 21 is arranged between the motor end cover 111 of the brake motor 10 and the second ratchet 22. The thickness of the first end 511 of each radial push rod 51 is less than a distance between the second ratchet 22 and the motor end cover 111. In this case, the thickness of the first end 511 is greater than the thickness of the second end 512. The nut 52 is configured to further push each radial push rod 51 toward the two ratchets, so that the first end 511 and the second end 512 are in contact with the second ratchet 22 successively. In addition, the second ratchet 22 is pushed to slide in the axial direction of the brake motor 10 in a direction away from the motor end cover 111.

In the axial direction of the brake motor 10, the thickness of the first end 511 of each radial push rod 51 is less than a distance between the radial protrusion 223 of the second ratchet 22 and the motor end cover 111, so that each radial push rod 51 is inserted between the radial protrusion 223 of the second ratchet and the motor end cover 111 in the radial direction of the brake motor 10. The second ratchet 22 is pushed in the axial direction of the brake motor 10 in a direction away from the stator 12.

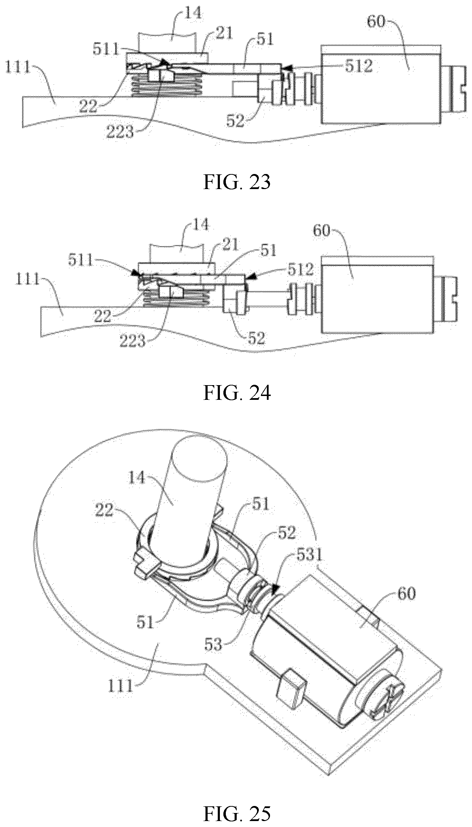

In an embodiment, in the axial direction of the brake motor 10, the second ratchet 22 is arranged between the motor end cover 111 of the brake motor 10 and the first ratchet 21. The height difference between the first end 511 and the second end 512 of each radial push rod 51 is less than the distance between the second ratchet 22 and the motor end cover 111. In the diagram of FIG. 23, the radial push rod 51 is configured to push the second ratchet 22 to slide in the axial direction of the brake motor 10 toward the motor end cover 111.

In the axial direction of the brake motor 10, the height difference between the first end 511 and the second end 512 of each radial push rod 51 is less than the distance between the second ratchet 22 and the motor end cover 111. In this way, each radial push rod 51 pushes the second ratchet 22 in the direction of the axial direction of the brake motor 10 toward the stator 12, and the fourth end face 222 of the second ratchet 22 is prevented from abutting against the motor end cover 111, to ensure that the second ratchet 22 is reliably pushed away from the first ratchet 21, and the two ratchets are released from the engaged state, as shown in FIG. 24.

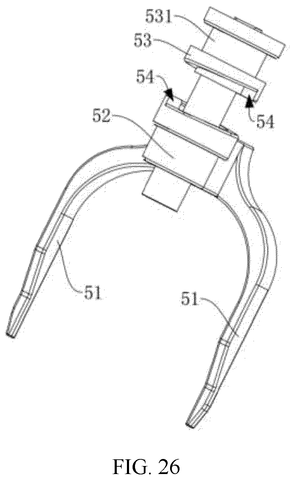

In an embodiment, the radial driving piece 50 may include a threaded spindle 53. Refer to FIG. 25 and FIG. 26. An axial direction of the threaded spindle 53 is parallel to the radial direction of the brake motor 10. One end of the threaded spindle 53 is configured to be in transmission connection to the output shaft 61 of the parking motor 60, and the other end of the threaded spindle 53 is configured to extend into an inner hole of the nut 52 and engage with the nut 52 for transmission. Therefore, the parking motor 60 drives the output shaft 61 to rotate, to drive the threaded spindle 53 to rotate synchronously. The nut 52 is engaged with the threaded spindle 53 for transmission, to convert a rotational motion of the threaded spindle 53 into a sliding motion of the radial push rod 51 in the radial direction of the brake motor 10.

In an embodiment, a middle section of the threaded spindle 53 includes a limiting annular groove 531. The radial boss 113 of the motor end cover 111 includes one or more radial limiting blocks 1131. The one or more radial limiting blocks 1131 are configured to extend in the axial direction of the brake motor 10, and separately extend into the limiting annular groove 531. In this embodiment, each radial limiting block 1131 is configured to abut against a groove wall of the limiting annular groove 531 in the radial direction of the brake motor 10, to limit fluttering of the threaded spindle 53 in the radial direction of the brake motor 10. Therefore, precision of driving each radial push rod 51 to slide by the nut 52 is ensured, and collision interference between the nut 52 and the circumferential limiting member 40, the axial driving piece 30, or the two ratchets is avoided.

In an embodiment, in the radial direction of the brake motor 10, the nut 52 and two opposite end faces of the threaded spindle 53 are further respectively provided with a structure of the circumferential limiting protrusion 54. The circumferential limiting protrusion 54 extends in the radial direction of the brake motor 10, and the circumferential limiting protrusion 54 is configured to limit a rotation angle of the nut 52 relative to the threaded spindle 53 in the circumferential direction of the nut 52. In a process in which the nut 52 rotates relative to the threaded spindle 53, the circumferential limiting protrusion 54 can prevent the nut 52 and the opposite end faces of the threaded spindle 53 from approaching each other and from being excessively squeezed, resulting in large contact friction force between the nut 52 and the threaded spindle 53. This prevents the nut 52 from driving the radial push rod 51 to slide in the radial direction.

Based on the foregoing embodiments, the electro-mechanical brake apparatus 200 with the radially integrated ratchet parking in this application may limit reverse rotation of the motor shaft 14 through engagement of the two ratchets after the motor shaft 14 rotates in the one direction and drives the friction plate 202 to abut against the brake disc 1002, to implement the parking function.

In this application, the electro-mechanical brake apparatus 200 drives, via the axial driving piece 30, the two ratchets to engage. The structure of the axial driving piece 30 is simple. This helps control the axial size of the electro-mechanical brake apparatus 200. The two ratchets are disengaged via the radial driving piece 50, and rotation of the second ratchet 22 is limited via the circumferential limiting member 40. The radial driving piece 50 and the circumferential limiting member 40 are both located on sides of the two ratchets in the radial direction of the brake motor 10, to compress the axial size of the electro-mechanical brake apparatus 200.

Therefore, the overall axial size of the electro-mechanical brake apparatus 200 in this application is controlled, to help the electro-mechanical brake apparatus 200 adapt to wheel space of the vehicle. The vehicle provided in this application also facilitates wheel space arrangement of the wheel 1001, and the vehicle also obtains larger internal space or a more compact structure.

Apparently, a person skilled in the art may make various modifications and variations to this application without departing from the protection scope of this application. This application is intended to cover these modifications and variations of this application provided that they fall within the scope of protection defined by the following claims and their equivalent technologies.

## Claims

1. An electro-mechanical brake apparatus with a radially integrated ratchet parking mechanism , wherein the electro-mechanical brake apparatus comprises:
a brake motor, wherein a motor shaft of the brake motor is configured to rotate in one direction and drive a friction plate to abut against a brake disc;
two ratchets, wherein the two ratchets are arranged opposite to each other in an axial direction of the brake motor, one ratchet is configured to be in transmission connection to the motor shaft, and the other ratchet is configured to engage with the one ratchet;
an axial driving piece, wherein the axial driving piece is configured to drive, in the axial direction of the brake motor, the other ratchet to engage with the one ratchet;
a circumferential limiting member, wherein the circumferential limiting member is configured to limit a rotation angle of the other ratchet in the two engaged ratchets in another direction, and the one direction is opposite to the another direction; and
a radial driving piece, wherein the radial driving piece is configured to slide in a radial direction of the brake motor and drive the other ratchet to move away from the one ratchet in the axial direction of the brake motor, to disengage the one ratchet.

2. The electro-mechanical brake apparatus according to claim 1, wherein in the axial direction of the brake motor, the two ratchets are sequentially sleeved on the motor shaft, and each ratchet comprises two opposite end faces;
one end face of the one ratchet and one end face of the other ratchet are arranged opposite to each other, the one end face of the one ratchet comprises a circle of unidirectional meshing teeth, the one end face of the other ratchet comprises another circle of unidirectional meshing teeth, and the circle of unidirectional meshing teeth is configured to engage with the another circle of unidirectional meshing teeth to limit a rotation angle of the one ratchet in the another direction; and
the other end face of the one ratchet and the other end face of the other ratchet are arranged away from each other, and the other end face of the other ratchet is configured to be driven by the axial driving piece.

3. The electro-mechanical brake apparatus according to claim 1 or 2, wherein an outer circumferential surface of the other ratchet comprises at least one of at least one radial groove or at least one radial protrusion, wherein
in the radial direction of the brake motor, a distance between a groove opening of each radial groove and the motor shaft is greater than a radius of the one ratchet, and a distance between a groove bottom of each radial groove and the motor shaft is less than or equal to the radius of the one ratchet; or
in the radial direction of the brake motor, a distance between the motor shaft and an end portion that is of each radial protrusion and that is away from the motor shaft is greater than a radius of the one ratchet.

4. The electro-mechanical brake apparatus according to claim 3, wherein the outer circumferential surface of the other ratchet comprises the at least one radial protrusion, and the at least one radial protrusion comprises at least one first radial protrusion, wherein
an extension direction of each first radial protrusion intersects a sliding direction of the radial driving piece;
in the radial direction of the brake motor, a distance between the motor shaft and an end portion that is of each first radial protrusion and that is away from the motor shaft is greater than a spacing distance between the radial driving piece and the motor shaft; and
in the axial direction of the brake motor, an end face that is of each first radial protrusion and that faces the one ratchet is configured to be driven by the radial driving piece.

5. The electro-mechanical brake apparatus according to any one of claims 1 to 4, wherein the circumferential limiting member comprises at least one limiting protrusion, wherein
in the radial direction of the brake motor, a spacing between each limiting protrusion and the motor shaft is greater than the radius of the one ratchet and less than a radius of the other ratchet, and each limiting protrusion is configured to be embedded into a radial groove on the outer circumferential surface of the other ratchet; or
in the radial direction of the brake motor, a spacing between each limiting protrusion and the motor shaft is greater than the radius of the one ratchet and greater than a radius of the outer circumferential surface of the other ratchet, and each limiting protrusion is configured to abut against the radial protrusion on the outer circumferential surface of the other ratchet.

6. The electro-mechanical brake apparatus according to any one of claims 1 to 5, wherein a housing of the brake motor comprises a motor end cover;
in the axial direction of the brake motor, the motor end cover is arranged on a side of a stator of the brake motor, the motor shaft passes through a shaft hole of the motor end cover, and the two ratchets are arranged on a side that is of the motor end cover and that is away from the stator; and
in the radial direction of the brake motor, a size of each ratchet is less than a size of the motor end cover.

7. The electro-mechanical brake apparatus according to claim 6, wherein an end face that is of the motor end cover and that is away from the stator comprises at least one axial protrusion, and the at least one axial protrusion is configured to form the circumferential limiting member.

8. The electro-mechanical brake apparatus according to claim 6 or 7, wherein the axial driving piece comprises a pressing plate and an elastic member, and the end face that is of the motor end cover and that is away from the stator is further configured to be fastened to the pressing plate; and
in the axial direction of the brake motor, the one ratchet is arranged between the other ratchet and the motor end cover, and the elastic member is connected between the other ratchet and the pressing plate.

9. The electro-mechanical brake apparatus according to claim 6 or 7, wherein the axial driving piece comprises an elastic member; and
in the axial direction of the brake motor, the other ratchet is arranged between the one ratchet and the motor end cover, and the elastic member is connected between the other ratchet and the end face that is of the motor end cover and that is away from the stator.

10. The electro-mechanical brake apparatus according to claim 6 to 9, wherein the housing of the brake motor further comprises a stator sleeve, the stator sleeve is configured to fasten and accommodate the stator of the brake motor, an outer circumferential surface of the motor end cover or an outer circumferential surface of the stator sleeve comprises a radial boss, an extension direction of the radial boss is away from the motor shaft in the radial direction of the brake motor, the radial boss is configured to fasten a parking motor, and the parking motor is configured to drive the radial driving piece.

11. The electro-mechanical brake apparatus according to claim 10, wherein the radial boss comprises an accommodating groove, the parking motor comprises a motor housing and an output shaft, and the output shaft extends out of the motor housing in the radial direction of the brake motor and is configured to drive the radial driving piece, wherein
in the axial direction of the brake motor, a groove opening of the accommodating groove faces the parking motor, and a sum of a groove depth of the accommodating groove and a distance between the output shaft and the motor end cover is greater than or equal to a radius of the motor housing; and
in the radial direction of the brake motor, a length of the accommodating groove is greater than or equal to a length of the motor housing.

12. The electro-mechanical brake apparatus according to any one of claims 1 to 11, wherein the radial driving piece comprises a nut and at least one radial push rod;
in the radial direction of the brake motor, one end of each radial push rod is configured to be fastened to the nut, the other end is configured to extend toward the two ratchets, and the nut is configured to receive driving force to push the at least one radial push rod to slide synchronously; and
in the axial direction of the brake motor, a height difference between the one end and the other end of each radial push rod is greater than an engagement depth of the two ratchets.

13. The electro-mechanical brake apparatus according to claim 12, wherein in the axial direction of the brake motor,
the one ratchet is arranged between the motor end cover of the brake motor and the other ratchet, and a thickness of the one end of each radial push rod is less than a distance between the other ratchet and the motor end cover; or
the other ratchet is arranged between the motor end cover of the brake motor and the one ratchet, and the height difference between the one end and the other end of each radial push rod is less than a distance between the other ratchet and the motor end cover.

14. The electro-mechanical brake apparatus according to claim 12 or 13, wherein the at least one radial push rod is spaced from each other in a direction perpendicular to the sliding direction of the radial driving piece, and a distance between each radial push rod and the motor shaft is greater than the radius of the one ratchet and less than a maximum radius of the other ratchet .

15. A vehicle, comprising a wheel, a vehicle frame, and the electro-mechanical brake apparatus according to any one of claims 1 to 14, wherein
the axial direction of the brake motor in the electro-mechanical brake apparatus is parallel to an axis of the wheel, and the brake motor is configured to slidably connect to the vehicle frame in the axial direction;
the motor shaft in the electro-mechanical brake apparatus is configured to rotate in the one direction and drive the friction plate to slide in an axial direction of the wheel to abut against the brake disc; and
the two ratchets in the electro-mechanical brake apparatus are configured to be engaged with each other to lock the friction plate.
